# EUROPÄISCHE PATENTSCHRIFT

(11) **EP 2 307 217 B1**
(45) Veröffentlichungstag und Bekanntmachung des Hinweises auf die Patenterteilung: **08.10.2014**
(21) Anmeldenummer: 09777660.3
(22) Anmeldetag: 05.08.2009
(51) Int. Cl.: B60J 7/22

(54) **WINDABWEISER MIT LINEAR OSZILLIERENDEM ABWEISERELEMENT**
WIND DEFLECTOR COMPRISING A LINEARLY OSCILLATING DEFLECTOR ELEMENT
DÉFLECTEUR D'AIR PRÉSENTANT UN ÉLÉMENT DÉFLECTEUR À OSCILLATION LINÉAIRE

(30) Priorität: 07.08.2008 DE 102008036887
(43) Veröffentlichungstag der Anmeldung: 13.04.2011
(73) Patentinhaber: Daimler AG, 70327 Stuttgart (DE)
(72) Erfinder: KUSCH, Engelbert, 88632 Salem (DE); SCHAUWECKER, Ludwig, 88718 Daisendorf (DE); SCHWARZ, Volker, 73061 Ebersbach (DE)
(74) Vertreter: JENSEN & SON
(86) Internationale Anmeldenummer: PCT/EP2009/005657
(87) Internationale Veröffentlichungsnummer: WO 2010/015389

(56) Entgegenhaltungen:
- EP-A- 1 514 715
- EP-A- 1 518 733
- WO-A-2006/069556
- DE-A1- 10 142 047
- DE-A1- 10 160 943
- DE-A1- 10 208 160
- DE-A1- 19 750 218
- DE-A1- 19 958 742
- DE-U1-202004 020 599
- JP-A- 2005 096 646
- US-B1- 6 174 025

## Beschreibung

Die vorliegende Erfindung betrifft einen Windabweiser für ein Fahrzeug mit einem Abweiserelement, das beweglich gelagert ist, und einen Aktuator zum Bewegen des Abweiserelements. Darüber hinaus betrifft die vorliegende Erfindung ein Fahrzeug mit einem Schiebedach und einem derartigen Abweiserelement.

Bei Hohlräumen, die von Luft angeströmt werden, tritt unter bestimmten Bedingungen eine periodische Druckschwankung auf. Dies kann bei allen Fahrzeugen ein Problem darstellen. Unter Fahrzeugen werden hier nicht nur Personenkraftwagen und Lastkraftwagen, sondern auch beispielsweise Flugzeuge und Züge verstanden.

Die Druckschwankungen in Fahrgastkabinen machen sich durch so genannte "Wummergeräusche" bemerkbar. Diese sind für die Fahrgäste außerordentlich unangenehm und störend. Daher sind beispielsweise an den Schiebedächern vielfach so genannte Windabweiser vorgesehen, die die Strömung so umlenken, dass die Druckschwankungen im Fahrgastraum reduziert sind. Starre Windabweiser führen jedoch nur in einem gewissen Maß zu einer Reduktion der Wummergeräusche.

Aus der Patentschrift DE 197 50 218 C2 ist ein Verfahren zur Unterdrückung periodischer Druckänderungen in einem von einer Außenströmung umströmten und mit einer Öffnung versehenen Hohlraum bekannt. Dabei werden periodisch und phasenrichtig eine der aktuellen Druckänderung im Inneren des Hohlraums entgegengerichtete Änderung der Strömungsrichtung der Außenströmung bewirkt. Speziell werden zur Beeinflussung der Strömung an der Vorderkante eines Dachausschnitts eines Personenkraftwagens phasenrichtig oszillierende kleine Umlenkflügel eingesetzt. Die Flügel lenken die Strömung an der Dachoberseite um. Elektromotoren, piezo-keramische Aktuatoren oder elektro-dynamische Aktuatoren bewirken eine Auslenkung der Flügel. Ein Regelkreis sorgt dafür, dass die Umlenkung der Außenströmung den Druckänderungen im Innenraum entgegenwirkt.

Nachteilig an derartigen Flügeln ist, dass sie an einer gekrümmten Achse angebracht werden müssen, denn das Dach eines Kraftwagens ist in der Regel gekrümmt. Diese Krümmung führt zu Problemen bei der Flügelbewegung.

Die Aufgabe der vorliegenden Erfindung besteht somit darin, einen Windabweiser vorzuschlagen, der zu verminderten Druckschwankungen in einem umströmten Hohlraum führt, und der mechanisch problemlos bewegbar ist.

Erfindungsgemäß wird diese Aufgabe gelöst durch einen Windabweiser gemäß Anspruch 1.

In vorteilhafter Weise ist die lineare Bewegung unabhängig von der Krümmung der Fahrzeugoberfläche, und das Abweiserelement kann die Kontur der Fahrzeugoberfläche erhalten, so dass optimale Strömungsbedingungen erzielt werden können.

Vorzugsweise besitzt der Windabweiser ein Mittelteil und unbewegliche Seitenteile, wobei das Abweiserelement im Mittelteil zwischen den Seitenteilen beweglich angeordnet ist. Das bewegliche Abweiserelement in der Mitte des Windabweisers genügt in der Regel, um eine hohe Dämpfung der Wummergeräusche zu erzielen.

Speziell kann das Mittelteil eine Abweiserbasis aufweisen, mit der die Seitenteile fest oder einteilig verbunden sind, und auf der der Aktuator befestigt ist. Damit lässt sich ein verhältnismäßig stabiler Windabweiser konstruieren.

Gemäß einer weiteren Ausführungsform können zwei Gelenkarme derart angeordnet sein, dass sie zusammen mit dem Abweiserelement und der Abweiserbasis ein Viergelenk bilden. Mit dem Abweiserelement ist so eine stabile Bewegung u. a. orthogonal zu der Abweiserbasis möglich.

Jeder der zwei Gelenkarme kann eine Blattfeder aufweisen. Mit diesen Federn wird das Viergelenk in eine stabile Mittenposition gebracht, um die das Abweiserelement oszillieren kann.

Entsprechend einer alternativen Ausführungsform weist der Windabweiser eine Linearführung für das Abweiserelement und eine Federeinrichtung zum Halten des Abweiserelements in einer Grundposition in der Linearführung auf. Auch hierdurch kann eine oszillierende Linearbewegung um eine Mittenposition realisiert werden.

Bei dieser alternativen Ausführungsform kann die Federeinrichtung zwei Schraubenfedern umfassen, die an zwei gegenüberliegenden Enden des Abweiserelements angebracht sind. Auf diese Weise lässt sich das Abweiserelement symmetrisch in einer Mittenposition federnd lagern.

Der Aktuator kann ein elektrodynamischer Aktuator sein, dessen Elemente in zwei orthogonalen Richtungen gegeneinander bewegbar sind. Damit lässt sich insbesondere die Schwingbewegung eines Viergelenks antreiben.

Gemäß einer weiteren Ausführungsform kann neben dem Aktuator ein weiterer Aktuator vorhanden sein, und jeder der Aktuatoren ist über eine Wippe mit dem Ende des Abweiserelements verbunden. Durch diese Wippenkonstruktion lässt sich ein Massenausgleich zwischen den Aktuatoren und dem Abweiserelement erzielen. Dadurch verursachen an der Basis eingeleitete Beschleunigungen keine Relativbewegung der Abweiserkante.

Des Weiteren kann das Abweiserelement ein derartiges Profil besitzen, dass eine Strömungsablösung bezogen auf die Anströmung an einer Hinterkante erfolgt. Dies hat den Vorteil, dass kleinere Strömungsgeschwindigkeiten an der Abweiserkante auftreten und Strömungswirbel kaum mehr auf das Abweiserelement selbst treffen können, wodurch die Geräuschbelästigung durch die Luftanströmung weiter reduziert wird.

Entsprechend einer bevorzugten Ausführungsform ist ein Fahrzeug mit einem Schiebedach vorgesehen, an dem der oben beschriebene Windabweiser angebracht ist. Mit ihm sind Wummergeräusche im Fahrgastraum besonders wirkungsvoll zu reduzieren.

Die vorliegende Erfindung wird nun anhand der beigefügten Zeichnungen näher erläutert, in denen zeigen:
- Fig. 1: einen Schnitt durch einen erfindungsgemäßen oszillierenden Abweiser;
- Fig. 2: eine Explosionsdarstellung der Einzelteile des Mittelteils des Abweisers von Fig. 1;
- Fig. 3: die Einzelteile des Aktuators von Fig. 1 und Fig. 2;
- Fig. 4: einen Abweiser mit feststehenden Spulen und Massenausgleich gemäß einer weiteren Ausführungsform der vorliegenden Erfindung;
- Fig. 5: einen Querschnitt durch den Mittelteil des Abweisers von Fig. 1;
- Fig. 6: einen Querschnitt durch einen alternativen Abweiser.

Die nachfolgend näher geschilderten Ausführungsbeispiele stellen bevorzugte Ausführungsformen der vorliegenden Erfindung dar.

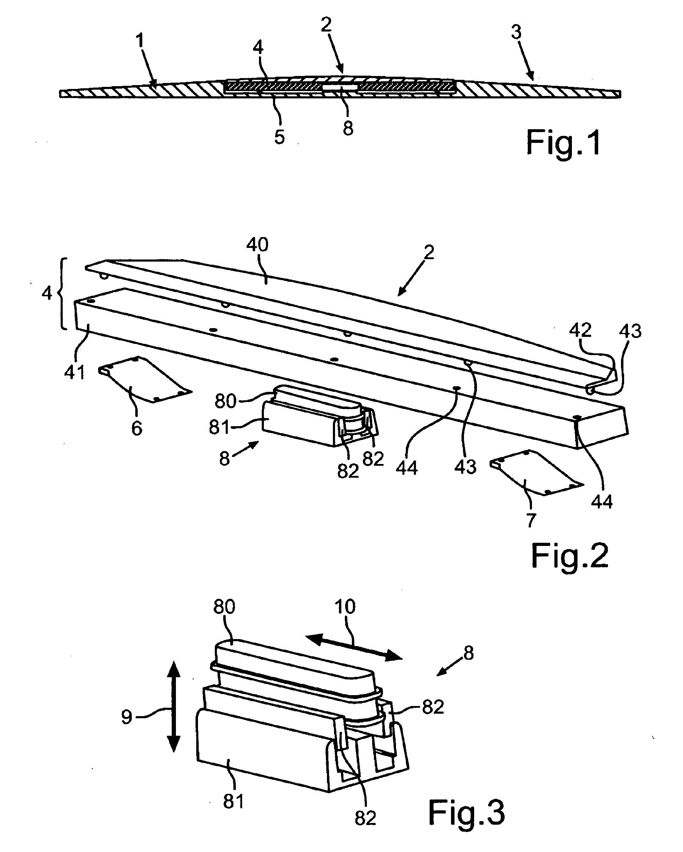

In Fig. 1 ist ein Windabweiser gemäß einem ersten Ausführungsbeispiel der vorliegenden Erfindung dargestellt. Fig. 1 zeigt den Windabweiser in der Ansicht auf die Vorderkante eines Schiebedachs. Insgesamt ist der Windabweiser länglich ausgebildet und entsprechend der Kontur des Fahrzeugdachs gewölbt. Der gesamte Windabweiser besteht aus drei Teilen, 1, 2 und 3. Nur die Oberkante bzw. der obere Abschnitt 4 des mittleren Teils 2 kann oszillieren. Die beiden Außenteile 1 und 3 fungieren als herkömmliche Abweiser und zugleich als Aussteifung der Basis 5 des gesamten Abweisers. Der gesamte Windabweiser wird beim Öffnen des Schiebedachs um ca. 15 mm nach oben gefahren, wie dies auch bei gängigen Windabweisern der Fall ist.

In Fig. 1 ist der gesamte Windabweiser im Längsschnitt dargestellt. Die Einzelteile des Mittelteils 2 sind in Fig. 2 in einer Explosionsdarstellung wiedergegeben. Der obere Abschnitt 4 des Mittelteils 2 stellt ein Abweiserelement dar und besteht hier aus einer Abweiserleiste 40 und einem oberen Arm 41 eines Viergelenks. Die Abweiserleiste 40 ist an die Dachkontur angepasst und besitzt eine Kante 42 zur Strömungsablösung. Weiterhin wird die Abweiserleiste 40 mit ensprechenden Stiften 43 in Bohrungen 44 des oberen Arms 41 gesteckt. Die Abweiserleiste 40 kann auch auf andere Weise mit dem oberen Arm 41 verbunden oder mit ihm einteilig gebildet sein.

Das genannte Viergelenk wird neben dem oberen Arm 41 und der Abweiserbasis 5 (in Fig. 2 nicht dargestellt) durch zwei Blattfedern 6 und 7 gebildet. Diese beiden Blattfedern 6 und 7 sind beispielsweise an der Abweiserbasis 5 und dem oberen Arm 41 angeschraubt. Sie verlaufen beispielsweise in einem Winkel von 20° zu dem oberen Arm 41 bzw. der Basis 5.

Ein elektrodynamischer Aktuator 8 greift an den oberen Abschnitt 4 des Mittelteils 2 zu Bewegungen gegenüber der Abweiserbasis 5 an. Der elektrodynamische Aktuator 8 weist, wie im Zusammenhang mit Fig. 3 unten näher erläutert wird, hier eine Spule 80 und einen Eisenkern 81 mit Magneten 82 auf.

Das Viergelenk definiert die vertikale Mittellage des Abweiserelements bzw. des oberen Abschnitts 4 des Mittelteils 2 und übernimmt die Führung der Spule 80 in dem Eisenkern 81 mit den Magneten 82. Außerdem wird durch das Viergelenk sichergestellt, dass sich die Abweiserleiste 40 vertikal immer parallel zur Abweiserbasis 5 bewegt.

Alternativ zu den Blattfedern 6 und 7 können die beiden seitlichen Arme des Viergelenks auch als steife Arme mit je einem Gelenk am Ende ausgebildet sein. Gegebenenfalls ist dann eine entsprechend andere Federeinrichtung bereitzustellen, um den oberen Abschnitt 4 des Abweisermittelteils 2 in einer Grundposition zu halten, um die er oszillieren kann.

Fig. 3 zeigt den elektrodynamischen Aktuator 8 im Detail. Er besitzt einen länglichen Eisenkern mit E-förmigem Profil. An den äußeren Schenkeln sind parallel zur Längsachse des Eisenkerns 81 Permanentmagnete 82 angeordnet. Zwischen diesen Permanentmagneten 82 auf bzw. über dem mittleren Schenkel des E-förmigen Eisenkerns 81 ist ein Spulenkörper 80 im Wesentlichen senkrecht zu der Längsachse des Eisenkerns 81 bzw. des Spulenkörpers 80, nämlich in vertikaler Richtung gemäß Doppelpfeil 9 bewegbar. Die Bewegung wird durch die magnetische Kraft herbeigeführt, die die beiden Magnetkomponenten 80 einerseits und 81 zusammen mit 82 andererseits aufeinander ausüben.

Außerdem kann der Spulenkörper 80 gemäß dem Doppelpfeil 10 entlang der Längsachse des Eisenkerns 81 bzw. der Magnete 82 Bewegungen ausführen. Diese seitliche Bewegung wird durch die Parallelführung mittels des Viergelenks bedingt.

Durch die beschriebene Anordnung mit mindestens zwei Magneten 82 in zwei parallelen Ebenen seitlich der Spule 80, die Bewegungen der Spule 80 in vertikaler und horizontaler Richtung erlaubt, lässt sich eine besonders niedrige und schmale Bauweise realisieren. Dennoch sind auch Bauweisen mit konventioneller Lautsprecherspule ebenfalls denkbar.

Eine mögliche zu dem Viergelenk alternative Ausführungsform kann beispielsweise mit zwei Schraubenfedern am linken und rechten Ende des oberen Abschnitts 4 des Abweisers ausgeführt sein. Es sind dann zusätzliche Führungselemente für den Aktuator 8 in Form von z. B. Längslenkern erforderlich.

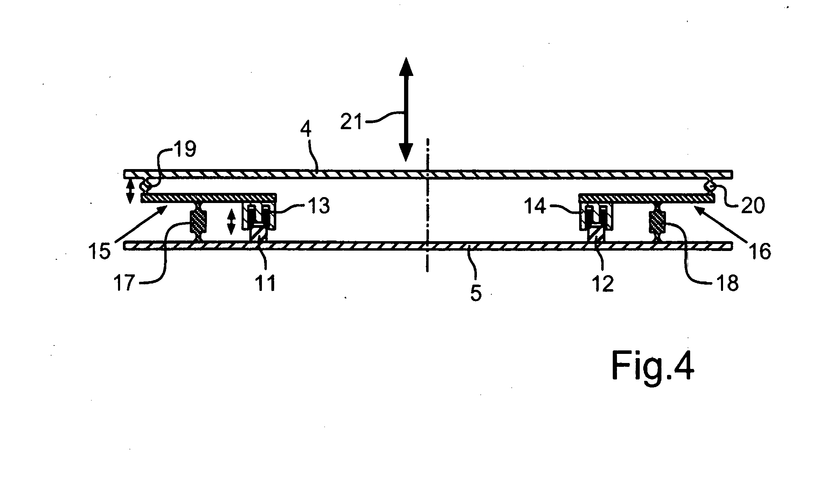

Eine weitere vorteilhafte Ausführungsform des erfindungsgemäßen oszillierenden Windabweisers ist in Fig. 4 dargestellt. Auch dieser Windabweiser kann wie der Windabweiser gemäß den Fig. 1 und 2 dreiteilig mit einem oszillierenden Mittelteil und starren Außenteilen gebildet sein. Alternativ kann der Windabweiser aber auch über die gesamte Länge oszillieren. Dies gilt für die Ausführungsform gemäß Fig. 4 ebenso wie für die Ausführungsform gemäß den Fig. 1 und 2.

Der Abweiser besitzt hier zwei Spulen 11 und 12, die auf der Basis 5 fest montiert sind. Die beiden Spulen 11 und 12 wirken mit Eisenkernen 13, 14 zusammen, die wie der Aktuator von Fig. 3 mit Permanentmagneten versehen sind. Die Eisenkerne 13 und 14 sind schwebend jeweils an einer Wippe 15, 16 aufgehängt. Die Wippen 15 und 16 sind jeweils über eine Pendelstütze 17, 18 auf der Basis 5 abgestützt. Das jeweilige dem Eisenkern 13, 14 gegenüberliegende Ende jeder Wippe 15, 16 ist über ein Federgelenk bzw. eine Pendelstütze 19, 20 mit einem der Enden des Oberteils 4 des oszillierenden Abweisers bzw. der Abweiserkante verbunden.

Wenn die Eisenkerne 13 und 14 oszillierende Bewegungen im Wesentlichen senkrecht zur Basis 5 durchführen, oszillieren die anderen Enden der Wippen 15 und 16 gegengleich. Deren Wippbewegung wird dann über die Pendelstützen 19 und 20 direkt auf das Oberteil 4 des Abweisers übertragen, so dass dieses gemäß dem Pfeil 21 ebenfalls vertikal bzw. senkrecht zur Basis oszilliert.

Durch die Wippen 15 und 16, an denen neben dem Oberteil 4 des Abweisers auch die Eisenkerne 13 und 14 angebracht sind, kann ein Massenausgleich hinsichtlich des Oberteils 4 erzielt werden. Dies hat den Vorteil, dass infolge der ausgeglichenen Massenkräfte vertikale Fahrzeugbeschleunigungen an der Basis des Abweisers keinen Einfluss auf dessen Funktion haben. Darüber hinaus ist kein Federelement erforderlich, das die vertikale Mittellage der Abweiserkante bzw. des oszillierenden Oberteils des Abweisers definiert. Ein weiterer Vorteil der Ausführungsform gemäß Fig. 4 besteht darin, dass eine einfache Stromzuführung zu den Spulen 11 und 12 möglich ist, da diese starr an der Basis 5 befestigt sind.

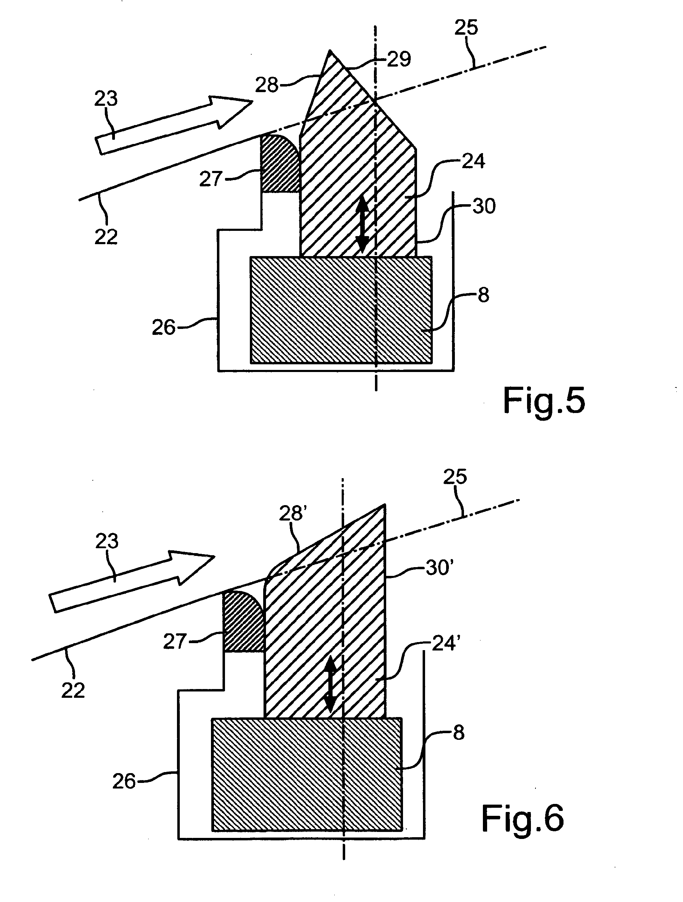

Fig. 5 zeigt einen Querschnitt durch einen erfindungsgemäßen Windabweiser, der in das Dach 22 eines Fahrzeugs eingebaut ist. Der Schnitt verläuft in Strömungsrichtung 23 der Luft. Der Windabweiser dient hier zur Unterdrückung von Wummergeräuschen bei einem Schiebedach. Das Schiebedach ist geöffnet, weswegen der oszillierende Abweiser 24, dessen Profil hier symbolisch als Fünfeck dargestellt ist und im Wesentlichen dem oberen Abschnitt 4 des Abweisers der Fig. 1 und 2 entspricht, aus dem Dachstrak 25 ragt. Angetrieben von dem Aktuator 8, der in einer Rinne 26 des Fahrzeugdachs 22 befestigt ist, vollführt der Abweiser 24 eine oszillierende Vertikalbewegung, die gegebenenfalls auch senkrecht zu dem Dachstrak 25 erfolgen kann. Der Abweiser 24 ist mit einer Dichtung 27 gegenüber der Rinne 26 bzw. dem Dach 22 entgegen der Anströmrichtung 23 abgedichtet.

Das Profil des Abweisers 24 ist nun wesentlich durch eine Vorderkante 28 und eine Hinterkante 29 charakterisiert. Die Vorderkante 28 wird direkt von der Luft angeströmt und ist also der Fahrtrichtung zugewandt. Weiterhin ist die Vorderkante 28 fast vertikal ausgerichtet. Die Hinterkante 29 ist gegenüber der vertikalen Hinterseite 30 des Abweiserunterteils etwas nach vorne geneigt. Die Strömungsablösung erfolgt an der Spitze der Vorderkante 28,. Dies hat zur Folge, dass an der Ablösekante hohe Strömungsgeschwindkigkeiten entstehen und Luftwirbel auf die Hinterkante 29 auftreffen und dabei zumindest in geringem Rahmen ebenfalls störende Geräusche hervorrufen.

Zur weiteren Reduktion der Störgeräusche wird daher gemäß Fig. 6 ein verbessertes Profil des oszillierenden Windabweisers bereitgestellt. Der Aufbau des gesamten Windabweisers, eingebaut in ein Fahrzeug, entspricht im Wesentlichen dem des Aufbaus von Fig. 5. Der einzige Unterschied besteht in dem Abweiser 24' und insbesondere in seinem Querschnittsprofil. Bei der Ausführungsform nach Fig. 6 ist die Vorderkante 28' sehr flach nach hinten gezogen und ist nur noch geringfügig steiler als das Dachstrak 25. Außerdem verläuft die Vorderkante 28' bis zur vertikalen Rückseite 30' des Abweisers 24'. Die Hinterkante wird damit von der Rückseite 30' gebildet. Die Strömungsablösung findet somit an der Hinterkante bzw. Rückseite 30' des Abweisers 24' statt. Damit treffen die Strömungswirbel aber nicht mehr auf den Abweiser selbst, so dass sie keine störenden Geräusche mehr verursachen können. Aufgrund der weitgehend ungestörten Anströmung und der Strömungsablösung an der Hinterkante werden daher hinsichtlich Wummerunterdrückung, Innengeräusch und Zugfreihaltung beste Ergebnisse erzielt.

## Patentansprüche

1. Windabweiser für ein Fahrzeug mit
- einem formstabilen Abweiserelement (4, 24, 24'), das beweglich gelagert ist, und
- einem Aktuator (8) zum Bewegen des Abweiserelements (4, 24, 24') in eine Luftströmung, wobei
- das Abweiserelement (4, 24, 24') mit dem Aktuator (8) verbunden ist, **dadurch gekennzeichnet dass** das Abweiserelement mit diesem in einer Raumrichtung linear oszillierend bewegbar ist.

2. Windabweiser nach Anspruch 1,
**dadurch gekennzeichnet, dass**
er ein Mittelteil (2) und unbewegliche Seitenteile (1, 3) aufweist, wobei das Abweiserelement (4, 24,24') im Mittelteil (2) zwischen den Seitenteilen (1, 3) beweglich angeordnet ist.

3. Windabweiser nach Anspruch 2,
**dadurch gekennzeichnet, dass**
das Mittelteil (2) eine Abweiserbasis (5) aufweist, mit der die Seitenteile (1, 3) fest oder einteilig verbunden sind, und auf der der Aktuator (8) befestigt ist.

4. Windabweiser nach einem der vorhergehenden Ansprüche,
**dadurch gekennzeichnet, dass**
zwei Gelenkarme (6, 7) derart angeordnet sind, dass sie zusammen mit dem Abweiserelement (4, 24, 24') und der Abweiserbasis (5) ein Viergelenk bilden.

5. Windabweiser nach Anspruch 4,
**dadurch gekennzeichnet, dass**
jeder der zwei Gelenkarme (6, 7) eine Blattfeder aufweist.

6. Windabweiser nach einem der Ansprüche 1 bis 3,
**dadurch gekennzeichnet, dass**
er eine Linearführung für das Abweiserelement (4, 24, 24') und eine Federeinrichtung zum Halten des Abweiserelements (4, 24, 24') in einer Grundposition in der Linearführung aufweist.

7. Windabweiser nach Anspruch 6,
**dadurch gekennzeichnet, dass**
die Federeinrichtung zwei Schraubenfedern umfasst, die an zwei gegenüberliegenden Enden des Abweiserelements (4, 24, 24') angebracht sind.

8. Windabweiser nach einem der vorhergehenden Ansprüche,
**dadurch gekennzeichnet, dass**
der Aktuator (8) ein elektrodynamischer Aktuator ist, dessen Elemente (80; 81, 82) in zwei orthogonalen Richtungen gegeneinander bewegbar sind.

9. Windabweiser nach einem der vorhergehenden Ansprüche,
**dadurch gekennzeichnet, dass**
neben dem Aktuator (8) ein weiterer Aktuator vorhanden ist, und jeder der Aktuatoren jeweils über eine Wippe (15, 16) mit einem Ende des Abweiserelements (4, 24, 24') verbunden ist.

10. Windabweiser nach einem der vorhergehenden Ansprüche,
**dadurch gekennzeichnet, dass**
das Abweiserelement (4, 24, 24') ein derartiges Profil besitzt, dass eine Strömungsablösung bezogen auf die Anströmung an einer Hinterkante (30') erfolgt.

## Claims

1. Wind deflector for a vehicle, comprising
- a dimensionally stable deflector element (4, 24, 24') which is mounted movably, and
- an actuator (8) for moving the deflector element (4, 24, 24') into an air flow, wherein
- the deflector element (4, 24, 24') is connected to the actuator (8), **characterised in that**
the deflector element is capable of linearly oscillating movement in one direction in space together with the latter.

2. Wind deflector according to claim 1,
**characterised in that**
it comprises a central part (2) and two fixed side parts (1, 3), the deflector element (4, 24, 24') being movably mounted in the central part (2) between the side parts (1, 3).

3. Wind deflector according to claim 2,
**characterised in that**
the central part (2) comprises a deflector base (5) to/with which the side parts (1, 3) are permanently joined or integrated and on which the actuator (8) is mounted.

4. Wind deflector according to any of the preceding claims,
**characterised in that**
two hinged arms (6, 7) are arranged such that they form a four-bar linkage together with the deflector element (4, 24, 24') and the deflector base (5).

5. Wind deflector according to claim 4,
**characterised in that**
each of the two hinged arms (6, 7) comprises a leaf spring.

6. Wind deflector according to any of claims 1 to 3,
**characterised in that**
it comprises a linear guide for the deflector element (4, 24, 24') and a spring device for holding the deflector element (4, 24, 24') in a base position in the linear guide.

7. Wind deflector according to claim 6,
**characterised in that**
the spring device comprises two coil springs mounted on opposite ends of the deflector element (4, 24, 24').

8. Wind deflector according to any of the preceding claims,
**characterised in that**
the actuator (8) is an electro-dynamic actuator with elements (80; 81, 82) which are movable relative to one another in two orthogonal directions.

9. Wind deflector according to any of the preceding claims,
**characterised in that**
next to the actuator (8), there is a further actuator, and each of the actuators is connected to an end of the deflector element (4, 24, 24') via a rocker (15, 16).

10. Wind deflector according to any of the preceding claims,
**characterised in that**
the deflector element (4, 24, 24') has a profile which is designed such that it results in a flow separation relative to the approach flow at a rear edge (30').

## Revendications

1. Déflecteur pour un véhicule doté
- d'un élément déflecteur indéformable (4,24, 24') qui est monté mobile, et
- d'un actionneur (8) permettant de déplacer l'élément déflecteur (4, 24, 24') dans un flux d'air,- l'élément déflecteur (4. 24, 24') étant relié à l'actionneur (8), **caractérisé en ce que** l'élément déflecteur peut être déplacé au moyen de celui-ci dans une direction dans l'espace de façon à osciller linéairement.

2. Déflecteur selon la revendication 1, **caractérisé en ce qu'**il présente une partie médiane (2) et des parties latérales mobiles (1, 3), l'élément déflecteur (4, 24, 24') étant disposé mobile dans la partie médiane (2) entre les parties latérales (1, 3).

3. Déflecteur selon la revendication 2, **caractérisé en ce que** la partie médiane (2) présente une base de déflecteur (5) avec laquelle les parties latérales (1, 3) sont reliées à demeure ou d'un seul tenant, et sur laquelle est fixé sur l'actionneur (8).

4. Déflecteur selon l'une quelconque des revendications précédentes, **caractérisé en ce que** deux bras articulés (6, 7) sont disposés de telle sorte qu'ils forment conjointement avec l'élément déflecteur (4, 24, 24') et la base de déflecteur (5) un système à quatre éléments articulés.

5. Déflecteur selon la revendication 4, **caractérisé en ce que** chacun des deux bras articulés (6, 7) présente un ressort à lame.

6. Déflecteur selon l'une quelconque des revendications 1 à 3, **caractérisé en ce qu'**il présente un guidage linéaire pour l'élément déflecteur (4, 24, 24') et un dispositif à ressort destiné à maintenir l'élément déflecteur (4, 24, 24') dans une position initiale dans le guidage linéaire.

7. Déflecteur selon la revendication 6, **caractérisé en ce que** le dispositif à ressort comprend deux ressorts cylindriques qui sont disposés sur les deux extrémités opposées de l'élément déflecteur (4, 24, 24').

8. Déflecteur selon l'une quelconque des revendications précédentes, **caractérisé en ce que** l'actionneur (8) est un actionneur électrodynamique, dont les éléments (80, 81, 82) peuvent se déplacer l'un par rapport à l'autre dans deux directions orthogonales.

9. Déflecteur selon l'une quelconque des revendications précédentes, **caractérisé en ce qu'**en plus de l'actionneur (8) un second actionneur est prévu et chacun des actionneurs est relié à chaque fois par une bascule (15, 16) à une extrémité de l'élément déflecteur (4, 24, 24').

10. Déflecteur selon l'une quelconque des revendications précédentes, **caractérisé en ce que** l'élément déflecteur (4, 24, 24') possède un tel profil qu'un décollement d'écoulement se produit sur une arête arrière (30') relatif au soufflage.
